# EUROPEAN PATENT APPLICATION

(11) **EP 4 292 907 A1**
(43) Date of publication of application: **20.12.2023**
(21) Application number: 22882641.8
(22) Date of filing: 08.10.2022
(51) Int. Cl.: B62D 25/20

(54) **MIDDLE-REAR FLOOR FRAMEWORK**

(30) Priority: 18.10.2021 CN 202122503116 U; 18.10.2021 CN 202111209385; 18.10.2021 CN 202122503049 U
(71) Applicant: Zhejiang Geely Holding Group Co., Ltd., Hangzhou, Zhejiang 310051 (CN); ZHEJIANG LEVC R & D CO., LTD., Zhejiang 315336 (CN)
(72) Inventor: SONG, Yadong, Hangzhou, Zhejiang 310051 (CN); DU, Jinxing, Hangzhou, Zhejiang 310051 (CN); SUN, Kaijun, Hangzhou, Zhejiang 310051 (CN); IAN HEWLETT, Carl, Hangzhou, Zhejiang 310051 (CN); NAN, Shengliang, Hangzhou, Zhejiang 310051 (CN)
(74) Representative: Dai, Simin
(86) International application number: PCT/CN2022/123853
(87) International publication number: WO 2023/066031

(57) **Abstract**

The disclosure relates to a mid and rear floor structure, including a mid floor frame structure and a battery pack. The mid floor frame structure includes a crossbeam assembly and a longitudinal beam assembly. The battery pack is installed below the crossbeam assembly. Both the crossbeam assembly and the battery pack are supported by the longitudinal beam assembly.

## Description

### CROSS-REFERENCE TO RELATED APPLICATIONS

This application claims priority of the Chinese patent application with the application number 202111209385.9 and the application date of October 18, 2021, the priority of the Chinese patent application with the application number 202122503116.5 and the application date of October 18, 2021, and the priority of the Chinese patent application with the application number 202122503049.7 and the application date of October 18, 2021, the entire contents of the above Chinese patent applications are hereby incorporated into this application.

### TECHNICAL FIELD

The present disclosure relates to a field of vehicles, in particular to a mid and rear floor structure.

### BACKGROUND

In order to ensure that a vehicle can achieve five-star safety goals of ENCAP (Euro-New Car Assessment Program) and CNCAP (China-New Car Assessment Program), especially for side impacting and pillar impacting, the mid floor sill bears the maximum load, while the mid floor crossbeam in the car bears the force transfer. In the mid and rear floor structure of the vehicle body, generally the mid floor is not flush with the rear floor, and the mid floor crossbeams are arranged inside the vehicle, which takes up more space in the vehicle. Therefore, it is necessary to provide an improved mid and rear floor structure.

### SUMMARY

An embodiment of the present disclosure provides a mid and rear floor structure, including a mid floor frame structure and a battery pack, where the mid floor frame structure includes a crossbeam assembly and a longitudinal beam assembly, the battery pack is installed below the crossbeam assembly, and the crossbeam assembly and the battery pack are supported by the longitudinal beam assembly.

In some embodiments, the mid and rear floor structure further includes a mid floor, a rear floor, and a seat pit, where the mid floor is installed above the crossbeam assembly; the mid floor, the rear floor, and the seat pit are connected in sequence; and the crossbeam assembly, the battery pack, the mid floor, the rear floor, and the seat pit are all supported by the longitudinal beam assembly.

In some embodiments, the longitudinal beam assembly includes a first sill beam and a second sill beam; the crossbeam assembly includes a first mid floor crossbeam, a second mid floor crossbeam and a third mid floor crossbeam; both ends of the first mid floor crossbeam, both ends of the second mid floor crossbeam and both ends of the third mid floor crossbeam are respectively connected to the first sill beam and the second sill beam through mid floor crossbeam connection brackets.

In some embodiments, the battery pack is installed below the first mid floor crossbeam, the second mid floor crossbeam and the third mid floor crossbeam; and two ends of the battery pack are respectively connected to the first sill beam and the second sill beam.

In some embodiments, each of the first sill beam and the second sill beam is provided with longitudinal beam battery pack fix points, and the battery pack is fixed on the longitudinal beam battery pack fix points.

In some embodiments, the first mid floor crossbeam, the second mid floor crossbeam and the third mid floor crossbeam are all provided with crossbeam battery pack fix points, and the battery pack is fixed on the longitudinal beam battery pack fix points and the crossbeam battery pack fix points.

In some embodiments, each of the first sill beam and the second sill beam includes a multi-cavity structure.

In some embodiments, the first sill beam and the second sill beam each includes a crossbeam supporter and a battery supporter connected with each other, the crossbeam supporter is above the battery supporter, a cross-section of the crossbeam supporter is a hollow quadrilateral, a cross-section of the battery supporter is a porous grid shape; and one side of the crossbeam supporter is connected with the mid floor crossbeam connection brackets, and one side of the battery supporter is connected with the battery pack.

In some embodiments, the battery supporter includes a first-layer supporter, a second-layer supporter, and a bottom connector that are connected in sequence; and cross-sections of the first-layer supporter, the second-layer supporter, and the bottom connector include one or more polygons.

In some embodiments, the cross-section of the first-layer supporter includes two interconnected polygons, the cross-section of the second-layer supporter includes three sequentially connected polygons, and the cross-section of the bottom connector includes two polygons.

In some embodiments, each of the mid floor crossbeam connection brackets includes a first horn shaped connection plate, a second horn shaped connection plate and a bottom fix plate; and the bottom fix plate is fixedly connected to bottoms of the first horn shaped connection plate and the second horn shaped connection plate respectively to form a U-shaped structure; a top of each of the first horn shaped connection plate and the second horn shaped connection plate is configured to connect the first mid floor crossbeam, the second mid floor crossbeam or the third mid floor crossbeam; and sides of the first horn shaped connection plate and the second horn shaped connection plate are configured to connect the first sill beam or the second sill beam.

In some embodiments, the top of each of the first horn shaped connection plate and the second horn shaped connection plate is provided with a first connection sheet; both sides of a top of each of the first mid floor crossbeam, the second mid floor crossbeam and the third mid floor crossbeam are correspondingly provided with a second connection sheet; the first mid floor crossbeam, the second mid floor crossbeam or the third mid floor crossbeam is between the first horn shaped connection plate and the second horn shaped connection plate; the second connection sheet is connected with the first connection sheet; and a bottom of a side of each of the first horn shaped connection plate and the second horn shaped connection plate is connected with a third connection sheet, the third connection sheet is configured to connect the first sill beam or the second sill beam.

In some embodiments, the first sill beam and the second sill beam are connected to the battery pack by bolts.

In some embodiments, a top of each of the first mid floor crossbeam, the second mid floor crossbeam and the third mid floor crossbeam are connected to the mid floor.

In some embodiments, the mid floor and the rear floor are configured to install second-row seats and third-row seats; and the seat pit is configured to install fourth-row seats.

In some embodiments, upper surfaces of the mid floor and the rear floor are laid with seat long slide rails.

The present disclosure has the following advantages.
(1) In this disclosure, the battery pack is installed below the crossbeam assembly and supported by the longitudinal beam assembly, such that the vehicle body floor can be set as a flat floor, and the structural strength of the battery pack is used to enhance stiffness of the vehicle. In addition, in order to meet the requirements of more passengers traveling together, the present disclosure provides a seat pit at rear of the vehicle body, which can realize storage function after fourth-row seats are folded down in the seat pit, such that the fourth-row seats can be used for sitting when the fourth-row seats are installed, and goods can be stored on the seat pit when the fourth-row seats are folded down in the seat pit, or goods can be stored in the seat pit when the fourth-row seats are not provided. The vehicle body floor adopts a flat floor design structure, which can be laid with long seat slide rails to achieve common rails of the second-row seats and the third-row seats sliding together, achieving large seating space and storage space overall, and being flexible and versatile.
(2) Floor light weight and generalization are realized. For front impact force transmission of the vehicle body, in the present disclosure, only two longitudinal sill beams are provided to carry the front impact force transmission, and other longitudinal beams are not provided to achieve a lightweight design, and the three mid floor crossbeams are not limited by specifications of other longitudinal beams, and can be shared to achieve generalization. The three mid floor crossbeams are arranged at lower part of the mid floor to achieve good side impact support. The sill beam adopts multi-cavity aluminium structure to achieve good structural strength, side impact bending resistance, and column impact energy absorption.
(3) Large space and high performance are realized. Left and right sill beams are designed to be relatively tall and arranged with a large spacing to achieve a wider and taller battery pack layout; in order to install battery, the mid floor sill beams are designed with battery pack installation points to realize the overall fix of the battery pack, such that the battery and the vehicle body are integrated, and at the same time, the torsional and bending stiffness of the vehicle body is greatly improved.
(4) The rear floor and seats can be flipped into the pit. The longitudinal beams and crossbeams of the rear floor are arranged at the bottom of the floor to achieve a fully flat floor at the top, and the rear is designed with a deep pit, which can store materials and achieve seat flipping into the pit to achieve a flat floor at the top. With this flipped seat reinforcement and filling, the rear crashworthiness is greatly improved, and the rear NVH (Noise, Vibration, Harshness) features and noise suppression have a better performance.
(5) Modularization is realized. The floor elements of the pit can be quickly removed in the seat pit area, and steel plates coverage can be added thereon to realize the rapid development and switching for vehicles with different purposes.
(6) The multi-cavity structure is used as the crossbeam supporter and the battery supporter. The cross-section of the beam supporter is a hollow quadrilateral, and the cross-section of the battery supporter is a porous grid shape. When the vehicle body is subjected to a large side impact force, the crossbeam supporter will collapse first, and the side impact force will be transmitted to each mid floor crossbeam to reduce the force on the battery pack. The battery supporter is relatively stable, which can provide a certain amount of side impact resistance through the battery pack, and can collapse and absorb energy to protect the battery pack when the vehicle body is subjected to excessive side impact force.

### BRIEF DESCRIPTION OF THE DRAWINGS

FIG. 1 is a schematic diagram showing an overall structure of a mid and rear floor structure according to embodiments of the present disclosure;
FIG. 2 is a structure diagram of a bottom beam frame of the mid and rear floor of a mid and rear floor structure according to embodiments of the present disclosure;
FIG. 3 is a schematic diagram of distribution of battery pack fix points in FIG. 2;
FIG. 4 is a diagram of a cross-section along the A-A line in FIG. 2;
FIG. 5 is a diagram of a cross-section along the C-C line in FIG. 2;
FIG. 6 a schematic diagram of a deformation structure of a seat pit according to embodiments of the present disclosure;
FIG. 7 is a schematic diagram of a side impact force transmission direction of a mid and rear floor structure according to embodiments of the present disclosure;
FIG. 8 is a diagram of a cross-section along the B-B line in FIG. 7;
FIG. 9 is an exploded schematic diagram of connectors between a sill beam and a mid floor crossbeam according to embodiments of the present disclosure.

### DETAILED DESCRIPTION

In order to make the purpose, technical solutions and advantages of the embodiments of the present disclosure clearer, the technical solutions in the embodiments of the present disclosure will be clearly and completely described below with reference to the accompanying drawings in the embodiments of the present disclosure. The described embodiments are part of the embodiments of the present disclosure, not all of them. The components of the present disclosed embodiment, typically described and shown in the accompanying drawings, can be arranged and designed in various different configurations.

Accordingly, the following detailed description of the embodiments of the present disclosure provided in the accompanying drawings is not intended to the claimed scope of the present disclosure, but merely represents selected embodiments of the present disclosure. Based on the embodiments in the present disclosure, all other embodiments obtained by persons of ordinary skill in the art without creative efforts fall within the protection scope of the present disclosure.

It should be noted that like numerals and letters denote similar items in the following drawings, therefore, once an item is defined in one drawing, it does not require further definition and explanation in subsequent drawings.

In the description of the present disclosure, it should be noted that the orientations or positional relationships indicated by the terms "center", "upper", "lower", "left", "right", "vertical", "horizontal", "inner", "outer", etc. are based on the orientation or positional relationship shown in the drawings, or the orientation or positional relationship that the product is usually placed in use, and are only for the convenience of describing the present disclosure and simplifying the description, rather than indicating or implying that the referred device or element must have a specific orientation, be constructed and operated in a specific orientation. Therefore, it should not be construed as limiting the present disclosure.

It should be noted that the terms "first" and "second" are only used for descriptive purposes, and cannot be understood as indicating or implying relative importance or implicitly indicating the quantity of indicated technical features. Thus, a feature defined as "first" and "second" may explicitly or implicitly include one or more of these features. In the description of the present disclosure, "plurality" means two or more, unless otherwise specifically defined.

Furthermore, the terms "horizontal", "vertical" and the like do not imply that a component is absolutely level or overhanging, but may be slightly inclined. For example, "horizontal" only means that its direction is more horizontal than "vertical", and it does not mean that the structure must be completely horizontal, but can be slightly inclined.

For pure electric vehicle, a battery is generally arranged under a front mid floor, and the battery is between a battery pack installation crossbeam and a floor. And in order to meet the requirements of cruising range, it is necessary to arrange as many power batteries as possible. In order to ensure the stiffness and strength of the battery pack installation point, the size of the cavity formed by the battery pack installation crossbeam and the floor needs to be as large as possible. Therefore, the floor of the electric vehicle needs to be arranged on the upper side, and the downward movement of the floor is severely restricted.

The battery pack installation crossbeam and the floor are both supported by the sill, so there is a certain drop between the battery pack installation crossbeam and the sill, and the overlap between the battery pack installation crossbeam and the sill is low, making it difficult to achieve the safety goal of collision stars. In addition, the force transmission path of front impact will basically pass the force through a middle longitudinal beam and sill beams. Generally, the battery pack installation crossbeam and the mid floor crossbeam in this area cannot be used universally.

In addition, for the rear floor area of the vehicle body, crossbeams are generally arranged up and down to serve as storage space, etc. However, current vehicles may require more seats to meet the needs of more passengers to travel together. Therefore, there is also an urgent need for a flexible vehicle body structure that can increase the number of seats.

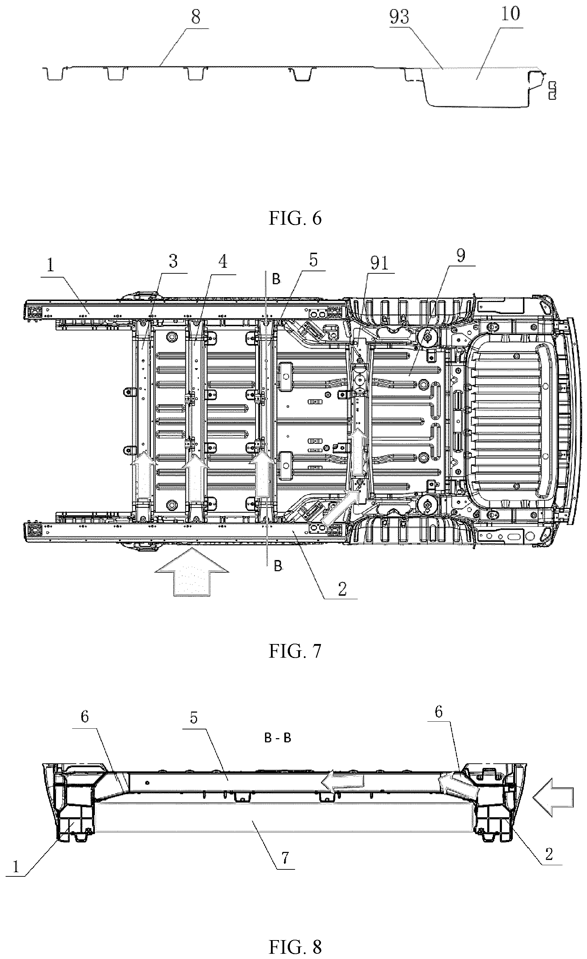

In an embodiment, as shown in FIG. 7 and FIG. 8, this embodiment provides a mid and rear floor structure, including a mid floor frame structure and a battery pack 7. The mid floor frame structure includes a crossbeam assembly (such as a mid floor crossbeam 3, a mid floor crossbeam 4, and a mid floor crossbeam 5 shown in FIG. 7) and a longitudinal beam assembly (such as a first sill beam 1 and a second sill beam 2 shown in FIG. 7). The battery pack 7 is installed below the crossbeam assembly, and both the crossbeam assembly and battery pack 7 are supported by the longitudinal beam assembly. In the present disclosure, the battery pack is installed below the crossbeam assembly and supported by the longitudinal beam assembly, such that the vehicle body floor can be set as a flat floor, and the structural strength of the battery pack can be used to enhance the stiffness of the vehicle.

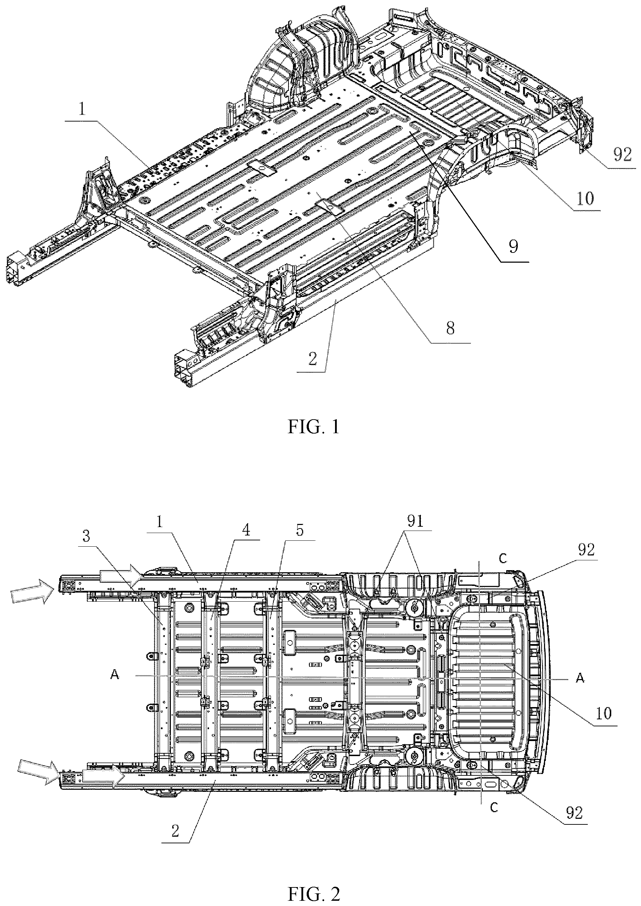

In another embodiment, as shown in FIG. 1, FIG. 7 and FIG. 8, this embodiment provides a mid and rear floor structure, including a mid floor 8, a rear floor 9, a seat pit 10, a mid floor frame structure and a battery pack 7. The mid floor frame structure includes a crossbeam assembly and a longitudinal beam assembly. The battery pack 7 is installed below the crossbeam assembly. The mid floor 8 is installed above the crossbeam assembly. The mid floor 8, the rear floor 9, and the seat pit 10 are sequentially connected. The crossbeam assembly, the battery pack 7, the mid floor 8, the rear floor 9, and the seat pit 10 are all supported by the longitudinal beam assembly.

The mid floor 8 and the rear floor 9 are used for installing second-row seats and third-row seats; and the seat pit 10 is used for installing fourth-row seats.

In some embodiments, an upper surface of the mid floor 8 is laid with seat long slide rails. The laying of long seat slide rails can achieve common rails of the second-row seats and the third-row seats sliding together, and the structure is flexible.

In order to meet the requirement of more passengers traveling together, the present disclosure provides a seat pit 10 at the rear of the vehicle body, which can be used for folding and storing the fourth-row seats, which can be used for sitting when the fourth-row seats are set in the seat pit 10, or for providing storage space when the fourth-row seats are folded in the seat pit, or for storing goods in the seat pit when the fourth-row seats are not set to provide greater storage space. The floor of the vehicle body adopts the design structure of the mid floor 8, which can be laid with long seat slide rails to achieve common rails of the second-row seats and the third-row seats sliding together, and realize large seating space and large storage space as a whole, which is flexible and variable. In addition, the battery pack 7 is installed below the crossbeam assembly and supported by the longitudinal beam assembly, which not only allows the floor of the vehicle body to be set as the mid floor 8, but also enhances the stiffness of the entire vehicle by utilizing the structural strength of the battery pack 7.

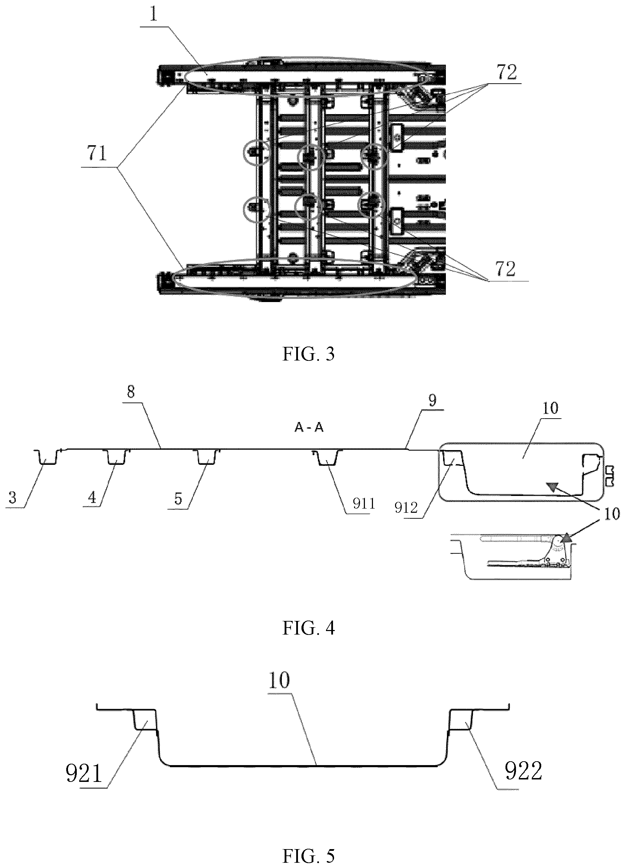

In some embodiments, as shown in FIG. 2 and FIG. 4, the longitudinal beam assembly includes a first sill beam 1 and a second sill beam 2, and the crossbeam assembly includes a first mid floor crossbeam 3, a second mid floor crossbeam 4 and a third mid floor crossbeam 5, where both ends of the first mid floor crossbeam 3, both ends of the second mid floor crossbeam 4, and both ends of the third mid floor crossbeam 5 are respectively connected to the first sill beam 1 and the second mid floor crossbeam 2 through mid floor crossbeam connection brackets 6 (as shown in FIG. 8 ).

In this embodiment, the first mid floor crossbeam 3, the second mid floor crossbeam 4 and the third mid floor crossbeam 5 are arranged parallel to each other, the first sill beam 1 and the second sill beam 2 are arranged parallel to each other, and the first sill beam 1 and the second sill beam 2 are respectively on both sides of the first mid floor crossbeam 3, both sides of the second mid floor crossbeam 4 and both sides of the third mid floor crossbeam 5.

A mid floor 8 can be installed above the first mid floor crossbeam 3, the second mid floor crossbeam 4 and the third mid floor crossbeam 5, so as to facilitate the movement of the seats.

In some embodiments, a battery pack 7 is installed below the first mid floor crossbeam 3, the second mid floor crossbeam 4 and the third mid floor crossbeam 5, and two ends of the battery pack 7 are respectively connected to the first sill beam 1 and the second sill beam 2.

As for the installation and fixation of the battery pack 7, as shown in FIG. 3, in this embodiment, the first sill beam 1 and the second sill beam 2 are provided with longitudinal beam battery pack fix points 71, the battery pack 7 can be fixed on the longitudinal beam battery pack fix points 71. In another embodiment, two columns of total six crossbeam battery pack fix points 72 are evenly arranged on the first mid floor crossbeam 3, the second mid floor crossbeam 4, and the third mid floor crossbeam 5 , that is, two crossbeam battery pack fix points 72 are arranged on each crossbeam, configured to fix the battery pack 7 together with the longitudinal beam battery pack fix points 71 to achieve uniform fixing of the battery pack in different regions, such that the battery and the vehicle body are fixed to form an integrated body, and the stability is greatly improved. As shown in FIG. 2 and FIG. 7, arrows in FIG.2 indicate the direction and path of the front impact force transmission, and arrows in FIG. 7 indicate the direction and path of the side impact force transmission. In this embodiment, for the front impact force transmission of the vehicle body, only two longitudinal sill beams are provided to carry the front impact force transmission, and other longitudinal beams are not provided, such that the three mid floor crossbeams (the first mid floor crossbeam 3, the second mid floor crossbeam 4, and the third mid floor crossbeam 5) have no specification limitations by other longitudinal beams, achieving universalization. In addition, these three mid floor crossbeams also take battery installation space into account, the battery pack 7 is installed below each mid floor crossbeam, and these three mid floor crossbeams are connected to the sill beams on both sides. When the vehicle body is subjected to side impact force, not only the mid floor crossbeam realizes side impact force transmission, but also achieves certain support through the structure of the battery pack 7. The structural strength of the battery pack 7 is used to enhance the stiffness of the vehicle, effectively protecting the internal passengers and the battery in the collision.

In addition, as shown in FIG. 2 and FIG. 4, the bottom of the rear floor 9 is provided with two rear floor crossbeams 91 (for example, the rear floor crossbeam 911 and the rear floor crossbeam 912 in FIG. 4) distributed transversely (for example, along the B-B direction in FIG. 7). And as shown in FIG. 2, the bottom of rear floor 9 is provided with rear floor longitudinal beams 92 (such as rear floor longitudinal beam 921 and rear floor longitudinal beam 922 in FIG. 5) on both sides of rear floor 9 distributed longitudinally (such as A-A direction in FIG. 2), where the rear floor longitudinal beam 921 is a structure in which the first sill beam 1 extends towards the rear floor 9 to the rear, and the rear floor longitudinal beam 922 is a structure in which the second sill beam 2 extends towards the rear floor 9 to the rear; the rear floor longitudinal beam 921 and the rear floor longitudinal beam 922 (i.e., the first sill beam 1 and the second sill beam 2) are configured to support the rear floor 9 and seat pit 10. The rear floor crossbeam 911 and the rear floor crossbeam 912 are respectively located at two ends of the rear floor 9 along the A-A direction, and the rear floor crossbeam 912 at the rear of the rear floor 9 also supports the seat pit 10 at the same time. The rear floor crossbeam 911 and the rear floor crossbeam 912 are both at the same level as the first mid floor crossbeam 3, the second mid floor crossbeam 4, and the third mid floor crossbeam 5, such that the mid floor 8 is flush with the rear floor 9.

The seat pit 10 can be designed to be deeper to have more storage space, allowing for more storage space and further achieving the upper part to be flat after flipping the seats into the pit. The rear crashworthiness is greatly improved, and the rear NVH vibration and noise suppression can further be achieved.

As shown in FIG. 6, for different requirements, such as the requirement for overall flat floor, elements of the seat pit can be directly removed, and a flat steel plate 93 can be added to the upper part of the seat pit, which can meet a fast switching of vehicle models with different needs, such as fast switching between models with three rows of seats and models with four rows of seats.

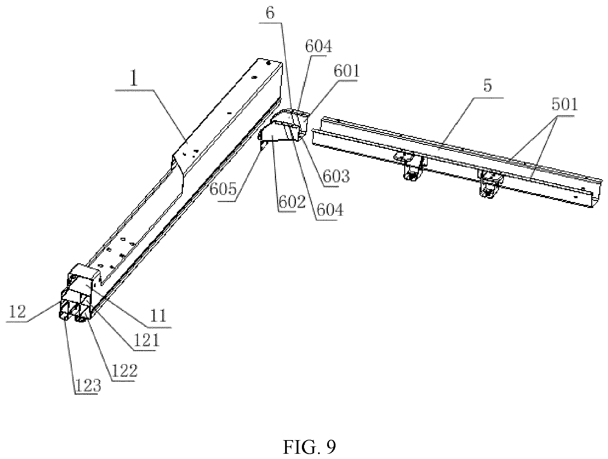

In some embodiments, as shown in FIG. 8 and FIG. 9, each of the first sill beam 1 and the second sill beam 2 includes a multi-cavity structure, which can be an aluminium structure in this embodiment. Each of the first sill beam 1 and the second sill beam 2 includes a crossbeam supporter 11 and a battery supporter 12 that are interconnected. The crossbeam supporter 11 is above the battery supporter 12. A cross-section of the crossbeam supporter 11 is a hollow quadrilateral shape, a cross-section of the battery supporter 12 is a porous grid shape, one side of the crossbeam supporter 11 is connected with the mid floor crossbeam connection brackets 6, and one side of the battery supporter 12 is connected with the battery pack 7.

In this embodiment, each of the first sill beam 1 and the second sill beam 2 includes a crossbeam supporter 11 and a battery supporter 12. The cross-section of the crossbeam supporter 11 is a hollow quadrilateral, and the cross-section of the battery supporter 12 is a porous grid shape. As shown in FIG. 7, the arrow in the figure shows the direction and path of side impact force transmission. When the vehicle body is subjected to a large side impact force, the crossbeam supporter 11 of the second sill beam 2 will first collapse, to transmit the side impact force to each mid floor crossbeam, reducing the force on battery pack 7; the battery supporter 12 is relatively stable, which can provide a certain degree of resistance to side impact through the battery pack 7, and can collapse and absorb energy when subjected to excessive side impact force, protecting the battery pack 7.

In some embodiments, as shown in FIG. 9, the battery supporter 12 includes a first-layer supporter 121, a second-layer supporter 122 and a bottom connector 123 that are connected in sequence, and a cross section of each of the first-layer supporter 121, the second-layer supporter 122 and the bottom connector 123 includes one or more polygons.

In this embodiment, a cross section of the first-layer supporter 121 includes two interconnected polygons, a cross section of the second-layer supporter 122 includes three sequentially connected polygons, and a cross section of the bottom connector 123 includes two polygons.

In some embodiments, as shown in FIG. 9, the mid floor crossbeam connection bracket 6 includes a first horn shaped connection plate 601, a second horn shaped connection plate602 and a bottom fix plate 603. The bottom fix plate 603 is fixedly connected to a bottom of the first horn shaped connection plate 601 and a bottom of the second horn shaped connection plate 602 to form a U-shaped structure. A top of the first horn shaped connection plate 601 and a top the second horn shaped connection plate 602 are configured to connect the first mid floor crossbeam 3, the second mid floor crossbeam 4, or the third mid floor crossbeam 5. A side of the first horn shaped connection plate 601 and a side of the second horn shaped connection plate 602 are configured to connect the first sill beam 1 or the second sill beam 2.

The top of each of the first horn shaped connection plate 601 and the second horn shaped connection plate 602 is provided with a first connection sheet 604, and both sides of a top of each of the first mid floor crossbeam 3, the second mid floor crossbeam 4 and the third mid floor crossbeam 5 are correspondingly provided with a second connection sheet 501; the first mid floor crossbeam 3, the second mid floor crossbeam 4 or the third mid floor crossbeam 5 is between the first horn shaped connection plate 601 and the second horn shaped connection plate 602; the second connection sheet 501 is connected with the first connection sheet 604.

The bottom of a side of each of the first horn shaped connection plate 601 and the second horn shaped connection plate 602 is connected with a third connection sheet 605, the third connection sheet 605 is configured to connect the first sill beam 1 or the second sill beam 2.

Compared with directly connecting the sill beam to the crossbeam, the mid floor crossbeam connection bracket 6 with horn shaped can realize the oblique transmission of the side impact force, and when a large side impact force is received, the crossbeam can be bent upward to a certain extent, avoiding damage to the battery. Moreover, the horn-shaped mid floor crossbeam connection bracket 6 can better cooperate with the crossbeam supporter 11 in the multi-cavity structure to achieve a collapse/shrink effect, and can further make the connection between the sill beam and the crossbeam more stable.

In this embodiment, the first sill beam 1 and the second sill beam 2 are connected to the battery pack 7 through bolts, and the battery pack 7 and the vehicle body are tightly connected through bolts, and the structural strength of the battery pack 7 is used to enhance the stiffness of the vehicle, effectively protecting the internal passengers and the battery in a collision.

The above provides a detailed description of some embodiments of the present disclosure. It should be understood that those skilled in the art can make many modifications and changes based on the concept of the present disclosure without creative efforts. Therefore, all technical solutions obtained by those skilled in the art through logical analysis, reasoning or limited experiments according to the concept of the present disclosure shall be within the protection scope determined by the claims.

## Claims

1. A mid and rear floor structure, comprising a mid floor frame structure and a battery pack (7), wherein the mid floor frame structure comprises a crossbeam assembly and a longitudinal beam assembly, the battery pack (7) is installed below the crossbeam assembly, and the crossbeam assembly and the battery pack (7) are supported by the longitudinal beam assembly.

2. The mid and rear floor structure according to claim 1, further comprising a mid floor (8), a rear floor (9), and a seat pit (10), wherein the mid floor (8) is installed above the crossbeam assembly; wherein the mid floor (8), the rear floor (9) and the seat pit (10) are connected in sequence; and wherein the crossbeam assembly, the battery pack (7), the mid floor (8), the rear floor (9) and the seat pit (10) are all supported by the longitudinal beam assembly.

3. The mid and rear floor structure according to claim 1 or 2, wherein the longitudinal beam assembly comprises a first sill beam (1) and a second sill beam (2); the crossbeam assembly comprises a first mid floor crossbeam (3), a second mid floor crossbeam (4) and a third mid floor crossbeam (5); and both ends of the first mid floor crossbeam (3), both ends of the second mid floor crossbeam (4) and both ends of the third mid floor crossbeam (5) are respectively connected to the first sill beam (1) and the second sill beam (2) through mid floor crossbeam connection brackets (6).

4. The mid and rear floor structure according to claim 3, wherein the battery pack (7) is installed below the first mid floor crossbeam (3), the second mid floor crossbeam (4) and the third mid floor crossbeam (5); and two ends of the battery pack (7) are respectively connected to the first sill beam (1) and the second sill beam (2).

5. The mid and rear floor structure according to claim 3, wherein each of the first sill beam (1) and the second sill beam (2) is provided with longitudinal beam battery pack fix points (71), and the battery pack (7) is fixed on the longitudinal beam battery pack fix points (71).

6. The mid and rear floor structure according to claim 5, wherein the first mid floor crossbeam (3), the second mid floor crossbeam (4) and the third mid floor crossbeam (5) are all provided with crossbeam battery pack fix points (72), and the battery pack (7) is fixed on the longitudinal beam battery pack fix points (71) and the crossbeam battery pack fix points (72).

7. The mid and rear floor structure according to claim 3, wherein each of the first sill beam (1) and the second sill beam (2) comprises a multi-cavity structure.

8. The mid and rear floor structure according to any one of claims 3 to 6, wherein the first sill beam (1) and the second sill beam (2) each comprises a crossbeam supporter (11) and a battery supporter (12) connected with each other; the crossbeam supporter (11) is above the battery supporter (12), a cross-section of the crossbeam supporter (11) is a hollow quadrilateral, a cross-section of the battery supporter (12) is a porous grid shape; and one side of the crossbeam supporter (11) is connected with the mid floor crossbeam connection brackets (6), and one side of the battery supporter (12) is connected with the battery pack (7).

9. The mid and rear floor structure according to claim 8, wherein the battery supporter (12) comprises a first-layer supporter (121), a second-layer supporter (122) and a bottom connector (123) that are connected in sequence, and a cross section of each of the first-layer supporter (121), the second-layer supporter (122) and the bottom connector (123) comprises one or more polygons.

10. The mid and rear floor structure according to claim 9, wherein the cross-section of the first-layer supporter (121) comprises two interconnected polygons, the cross-section of the second-layer supporter (122) comprises three sequentially connected polygons, and the cross-section of the bottom connector (123) comprises two polygons.

11. The mid and rear floor structure according to claim 3, wherein each of the mid floor crossbeam connection brackets (6) comprises a first horn shaped connection plate (601), a second horn shaped connection plate (602) and a bottom fix plate (603); and the bottom fix plate (603) is fixedly connected to bottoms of the first horn shaped connection plate (601) and the second horn shaped connection plate (602) respectively to form a U-shaped structure; a top of each of the first horn shaped connection plate (601) and the second horn shaped connection plate (601) is configured to connect the first mid floor crossbeam (3), the second mid floor crossbeam (4) or the third mid floor crossbeam (5); and a side of each of the first horn shaped connection plate (601) and the second horn shaped connection plate (602) is configured to connect the first sill beam (1) or the second sill beam (2).

12. The mid and rear floor structure according to claim 11, wherein, the top of each of the first horn shaped connection plate (601) and the second horn shaped connection plate(602) is provided with a first connection sheet (604); and both sides of a top of each of the first mid floor crossbeam (3), the second mid floor crossbeam (4) and the third mid floor crossbeam (5) are correspondingly provided with a second connection sheet (501); the first mid floor crossbeam (3), the second mid floor crossbeam (4) or the third mid floor crossbeam (5) is between the first horn shaped connection plate (601) and the second horn shaped connection plate (602); and the second connection sheet (501) is connected with the first connection sheet (604); and
a bottom of a side of each of the first horn shaped connection plate (601) and the second horn shaped connection plate (602) is connected with a third connection sheet (605), the third connection sheet (605) is configured to connect the first sill beam (1) or the second sill beam (2).

13. The mid and rear floor structure according to claim 3, wherein the first sill beam (1) and the second sill beam (2) are connected to the battery pack (7) by bolts.

14. The mid and rear floor structure according to claim 3, wherein a top of each of the first mid floor crossbeam (3), the second mid floor crossbeam (4) and the third mid floor crossbeam (5) is connected to the mid floor (8).

15. The mid and rear floor structure according to any one of claims 2-14, wherein the mid floor (8) and the rear floor (9) are configured to install second-row seats and third-row seats; and the seat pit (10) is configured to install fourth-row seats.

16. The mid and rear floor structure according to any one of claims 2-14, wherein upper surfaces of the mid floor (8) and the rear floor (9) are laid with seat long slide rails.
